# EUROPÄISCHE PATENTSCHRIFT

(11) **EP 0 923 424 B1**
(45) Veröffentlichungstag und Bekanntmachung des Hinweises auf die Patenterteilung: **27.02.2002**
(21) Anmeldenummer: 97941918.1
(22) Anmeldetag: 07.08.1997
(51) Int. Cl.: B23K 26/06

(54) **VORRICHTUNG ZUM SCHWEISSVERBINDEN ZWEIER BAUTEILE**
DEVICE FOR CONNECTING TWO COMPONENTS BY WELDING
DISPOSITIF POUR ASSEMBLER DEUX ELEMENTS PAR SOUDAGE

(30) Priorität: 13.08.1996 DE 19632625
(43) Veröffentlichungstag der Anmeldung: 23.06.1999
(73) Patentinhaber: Rofin-Sinar Laser GmbH, 22133 Hamburg (DE)
(72) Erfinder: EMMELMANN, Claus, D-21037 Hamburg (DE)
(74) Vertreter: Mörtel, Alfred, Dr. Dipl.-Phys.
(86) Internationale Anmeldenummer: EP9704298
(87) Internationale Veröffentlichungsnummer: WO9806534

(56) Entgegenhaltungen:
- EP-A- 0 440 002
- EP-A- 0 590 268
- EP-A- 0 607 456
- WO-A-95/03911
- DE-C- 4 331 827
- US-A- 4 654 505
- US-A- 4 945 489
- PATENT ABSTRACTS OF JAPAN vol. 007, no. 163 (M-229), 16.Juli 1983 & JP 58 068492 A (TOKYO SHIBAURA DENKI KK), 23.April 1983, in der Anmeldung erwähnt

## Beschreibung

Die Erfindung bezieht sich auf eine Vorrichtung zum Schweißverbinden zweier Bauteile mit einem Laserstrahl, die sich in einem Teilbereich ihrer einander zugewandten Oberflächen überlappen gemäß dem Oberbegriff des Anspruchs 1.

Beim Schweißverbinden von Bauteilen ist es bekannt, neben sogenannten Stoßschweißungen auch Überlappschweißungen einzusetzen. Solche Überlappschweißungen, bei denen sich die miteinander zu verbindenden Bauteile in in einem Teilbereich ihrer einander zugewandten Oberflächen überlappen, sind insbesondere für den Einsatz von Laserschweißverfahren geeignet, da mit einem Laserstrahl mit hohen Schweißgeschwindigkeiten hohe Einschweißtiefen bei zugleich geringem Wärmeeintrag und damit verbundener hoher Schweißgüte erzielt werden können. Aus fertigungstechnischen und wirtschaftlichen Gründen werden bei Überlappschweißungen die miteinander zu verbindenden Bauteile in der Regel durch mehrere voneinander beabstandete Punktschweißungen verbunden.

Eine Vorrichtung zum Punktschweißen mit einem Laserstrahl ist beispielsweise aus der Europäischen Patentschrift 0 440 002 B1 bekannt. Bei dieser bekannten Vorrichtung ist ein Laserschweißkopf am freien Ende eines mehrgelenkigen Roboterarmes angeordnet. Mit einem solchen Roboterarm kann der Schweißkopf frei über die Oberfläche des zu verbindenden Bauteiles geführt und an den zur Punktschweißung vorgegebenen Positionen angehalten werden. Hierzu wird der Schweißkopf mit Hilfe des Roboterarmes über einem Feststellelement positioniert, mit dem die beiden Bauteile in einem Überlappbereich fest aneinander gepresst sind. Dieses Feststellelement enthält zwei klammerähnliche Spannelemente, von denen eines mit einer zentralen Öffnung versehen ist. Über diese zentrale Öffnung wird der Laserschweißkopf positioniert und fixiert. Dadurch wird eine Punktschweißung an einer Stelle des Überlappbereiches ermöglicht, an der die Bauteile fest und möglichst spaltfrei aneinander gepresst sind. Mit Hilfe des Roboterarms kann der Laserschweißkopf nacheinander an mehrere voneinander beabstandete Spannelemente herangeführt werden, um durch eine Vielzahl solcher Punktschweißungen die Festigkeit der Verbindung sicherzustellen.

Aus der US-Patentschrift 4,654,505 ist es bekannt, anstelle eines einzigen mit einem Roboterarm führbaren Laserschweißkopfes mehrere an einer Spannvorrichtung angeordnete Laserschweißköpfe vorzusehen, in die zeitlich nacheinander durch verstellbare Spiegel der von einem Laser erzeugte und sich frei im Raum ausbreitende Laserstrahl eingekoppelt wird.

Die mit einem Laserstrahl erzeugte Punktschweißung hat jedoch einen relativ geringen Durchmesser, so daß die erforderliche Festigkeit der Verbindung nur mit einer entsprechend hohen Anzahl von Punktschweißungen gewährleistet ist. Dies ist mit einem erhöhten verfahrenstechnischen Aufwand verbunden, der die Wirtschaftlichkeit von Punktschweißverfahren, die mit einem Laserstrahl durchgeführt werden, in Frage stellt.

Aus der deutschen Patentschrift 43 31 827 C1 ist eine Vorrichtung zur Sicherung einer Schraubverbindung durch eine Mehrzahl von mit einem Laserstrahl erzeugten Mikroschweißpunkten bekannt, die am Umfang des Schraubenkopfs oder der Mutter angebracht werden. Bei dieser bekannten Vorrichtung werden durch einen im Laserschweißkopf angeordneten Strahlteiler zwei oder mehrere Teilstrahlen gebildet, so daß gleichzeitig mehrere Mikroschweißpunkte erzeugt werden. Eine zusätzliche Drehung der gesamten Optikanordnung innerhalb des Laserschweißkopfes ermöglicht ein mehrfaches Setzen der Mikroschweißpunkte am Umfang der Schraubverbindung, mit einem einzigen stationären Laserschweißkopf.

In der japanischen Offenlegungsschrift 58-68492 ist eine Vorrichtung zum Punktschweißen mit einem Laserstrahl offenbart, bei der im Laserschweißkopf eine drehbar gelagerte Ablenk- und Fokussieroptik angeordnet ist, die während des Schweißvorgangs gedreht wird, so daß die Schweißpunkte eine Kreislinie bilden und die Festigkeit der Schweißung erhöht ist.

Die EP-A-607 456 offenbart eine Vorrichtung gemäß dem Oberbegriff des Anspruchs 1.

Der Erfindung liegt nun die Aufgabe zugrunde, eine Vorrichtung zum Schweißverbinden zweier sich in einem Teilbereich mit einander zugewandten Oberflächen überlappender Bauteile mit einem Laserschweißverfahren anzugeben, bei der hohe Wirtschaftlichkeit und Schnelligkeit mit einer hohen Festigkeit der Schweißverbindung einhergehen.

Die Aufgabe wird gemäß der Erfindung gelöst durch eine Vorrichtung mit den Merkmalen des Patentanspruches 1. Die Vorrichtung zum Schweißverbinden zweier Bauteile mit einem Laserstrahl, die sich in einem Teilbereich ihrer einander zugewandten Oberflächen überlappen, enthält gemäß der Erfindung einen optischen Strahlverteiler, der einen Eingang für einen Laserstrahl sowie eine Einrichtung zum abwechselnden Verteilen des Laserstrahls auf eine Mehrzahl von Ausgängen hat, die jeweils über eine Strahlführungseinrichtung optisch an einen Laserschweißkopf gekoppelt sind, wobei im Laserschweißkopf zum Führen des fokussierten Laserstrahles über die Oberfläche des dem Laserschweißkopf zugewandten Bauteils eine Fokussier- und Ablenkoptik angeordnet ist.

Durch diese Maßnahmen kann ohne Bewegung des Laserschweißkopfes, also auch mit einem stationär an einer die zu fügenden Bauteile aufnehmenden Vorrichtung angeordneten Laserschweißkopf, durch Führen, d.h. Bewegen des Laserstrahls über die Oberfläche des Bauteils eine linienförmige Schweißnaht erzeugt werden. Mit anderen Worten: Anstelle einer der Anzahl der Laserschweißköpfe entsprechenden Anzahl von Punktschweißungen entsteht eine entsprechende Anzahl von räumlich voneinander getrennten Linienschweißungen, wobei die Linienform durch die Bewegung der Fokussier- und Ablenkoptik im Laserschweißkopf vorgegeben ist. Dadurch wird die Festigkeit der Verbindung der Bauteile erhöht, ohne daß hierzu eine Erhöhung der Anzahl der Schweißstellen erforderlich ist.

In einer vorteilhaften Ausgestaltung der Erfindung ist im Schweißkopf zum Fokussieren des Laserstrahls ein fokussierender Ablenkspiegel vorgesehen ist. Dadurch wird die Anzahl der im Schweißkopf erforderlichen optischen Elemente verringert. Insbesondere ist der fokussierende Ablenkspiegel linear verschiebbar gelagert. Dadurch kann eine Schweißnaht entlang einer geraden Linie erzeugt werden.

In einer weiteren vorteilhaften Ausgestaltung der Erfindung ist zum Fokussieren des Laserstrahls eine Linse vorgesehen ist, wobei in Ausbreitungsrichtung des Laserstrahls vor der Linse eine um eine senkrecht zur Mittenachse des Laserstrahls orientierte Achse schwenkbar gelagerte planparallele Platte angeordnet ist. Dadurch kann ebenfalls eine Schweißnaht entlang einer geraden Linie erzeugt werden.

In einer vorteilhaften Ausgestaltung ist vor der Linse ein um die Mittenachse des Laserstrahls drehbar gelagertes Prisma angeordnet. Auf diese Weise läßt sich eine kreislinienförmige Schweißnaht erzeugen. Durch diese Kreislinie, deren Kreisdurchmesser deutlich größer als die Linienbreite gewählt werden kann, wird praktisch eine Punktschweißung mit großem Durchmesser nachgebildet, und es werden bei verbesserter Schweißgüte ähnliche Festigkeitswerte erreicht.

Vorzugsweise ist als Strahlführungseinrichtung zwischen dem Strahlverteiler und dem Laserschweißkopf eine Lichtleitfaser vorgesehen. Dies ermöglicht eine größere Flexibilität bei der Auswahl des Ortes der Laserschweißköpfe, da die Strahlführung gegenüber einer Vorrichtung, bei der sich der Laserstrahl frei ausbreitet, vereinfacht ist.

Insbesondere sind im Strahlverteiler im Strahlengang des Laserstrahls schwenk- oder verschiebbare Umlenkspiegel angeordnet.

In einer besonders bevorzugten Ausgestaltung ist im Strahlverteiler im Strahlengang des Laserstrahls ein Umlenkspiegel angeordnet, der um die Achse des auf ihn einfallenden Laserstrahls drehbar ist und dem mehrere um diese Achse sternförmig angeordnete Ausgänge zugeordnet sind. Dadurch wird die zur Strahlverteilung erforderliche Anzahl beweglicher Umlenkspiegel verringert.

Zur weiteren Erläuterung der Erfindung wird auf die Ausführungsbeispiele der Zeichnung verwiesen. Es zeigen:
FIG 1 eine Prinzipdarstellung einer Vorrichtung gemäß der Erfindung,
FIG 2 einen Laserschweißkopf der Vorrichtung in einem Längsschnitt
FIG 3 und 4 jeweils eine schematische Darstellung von Ausführungsformen der in dem Laserschweißkopf angeordneten Fokussier- und Ablenkoptik,
FIG 5 und 6 jeweils eine Ausführungsform eines Strahlverteilers, mit dem der Laserstrahl eines Lasers auf mehrere Laserschweißköpfe verteilt werden kann.

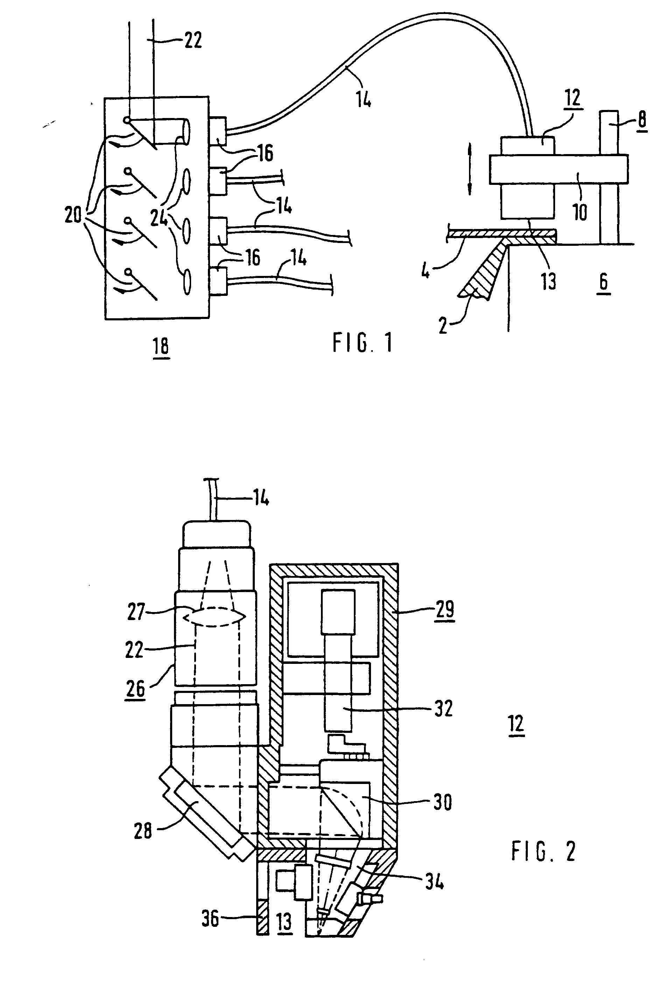

Gemäß FIG 1 sind zwei miteinander zu verbindende Bauteile 2 und 4 in einer Spanneinrichtung 6 angeordnet. Die Bauteile 2 und 4 überlappen sich in einem Teilbereich ihrer einander zugewandten Oberflächen und sind in diesem Überlappbereich miteinander durch einer Vielzahl von Spannelementen 8, von denen in der Figur nur eines dargestellt ist, gegeneinander verspannt. Im Ausführungsbeispiel umfaßt das Spannelement 8 jeweils eine beispielsweise in einer Linearführung fahrbare Halterung 10, an der ein Laserschweißkopf 12 fixiert ist. Anstelle einer linear fahrbaren Halterung kann auch ein pneumatisch oder hydraulisch schwenkbarer Hebel vorgesehen sein.

Der Laserschweißkopf 12 wird mit seiner Stimfläche 13 im Überlappbereich der beiden Bauteile 2 und 4 gegen die Oberfläche des ihm zugewandten Bauteiles 4 gepresst und sorgt für ein möglichst spaltfreies Anliegen der einander zugewandten Oberflächen der Bauteile 2 und 4 in einem Bereich, in dem eine Laserschweißung durchgeführt werden soll. Das Spannelement 8 dient somit zugleich als Positioniereinrichtung zum Positionieren und Fixieren des Laserschweißkopfes 12 über der Oberfläche des Bauteils 4.

Der Laserschweißkopf 12 ist optisch über eine Strahlführungseinrichtung 14, im Ausführungsbeispiel eine Lichtleitfaser, an einen Ausgang 16 eines optischen Strahlverteilers 18 gekoppelt, wobei jedem Ausgang 16 ein Laserschweißkopf 12 zugeordnet ist. Der optische Strahlverteiler 18 umfaßt eine der Anzahl der Ausgänge 16 entsprechende Anzahl von in einer Reihe angeordneten schwenkbaren Umlenkspiegeln 20, mit dem der von einem Laser erzeugte, im Ausführungsbeispiel frei geführte Laserstrahl 22 nacheinander je nach Schwenkposition der Umlenkspiegel 20 auf die unterschiedlichen Ausgänge 16 verteilt werden kann. Im optischen Strahlverteiler ist jedem Ausgang 16 eine Fokussieroptik 24 vorgeschaltet, mit der der Laserstrahl 22 in die Strahlführungseinrichtung 14 eingekoppelt wird.

Der Laserschweißkopf 12 dient im Ausführungsbeispiel zugleich als Teil des Spannelementes 8, mit dem die Spannkraft auf die sich überlappenden Bauteile 2 und 4 übertragen wird.

Gemäß FIG 2 enthält der Laserschweißkopf 12 eine Kollimiereinheit 26 mit einer gestrichelt eingezeichneten Kollimieroptik 27, in der der auf der Lichtleitfaser der Strahlführungseinrichtung 14 austretende Laserstrahl 22 kollimiert wird. An einem Ausgang der Kollimiereinheit 26 ist ein feststehender Ablenkspiegel 28 angeordnet, mit dem der kollimierte Laserstrahl um 90° abgelenkt wird. Neben der Kollimiereinheit 26 ist eine Fokussiereinheit 29 angeordnet, die einen fokussierenden Ablenkspiegel 30 enthält, mit dem der Laserstrahl 22 fokussiert und zur Stirnfläche 13 umgelenkt wird. Der fokussierende Ablenkspiegel 30 ist parallel zur Ausbreitungsrichtung des auf ihn auftreffenden kollimierten Laserstrahls 22 verschiebbar in der Fokussiereinheit 29 angeordnet, so daß mit ihm eine linienförmige Schweißnaht erzeugt werden kann, deren Länge durch die maximal mögliche Linearverschiebung des fokussierenden Ablenkspiegels 30 begrenzt ist. Die zur Linearverschiebung des fokussierenden Ablenkspiegels 30 erforderlichen Antriebselemente 32 sind ebenfalls in der Fokussiereinheit 29 angeordnet. Mit einer Spannvorrichtung 6, die mehrere solcher Laserschweißköpfe 12 umfaßt, werden die Bauteile 2 und 4 (Figur 1) mit einer Steppnaht miteinander verbunden.

Die Fokussiereinheit 29 umfaßt außerdem eine Schweißdüse 34, wie sie beispielsweise aus der WO 95/03911 bekannt ist. Die Schweißdüse 34 ist in einem unten offenen druckstabilen Gehäuseteil 36 angeordnet, der auf die Oberfläche des Bauteiles 4 aufgesetzt werden kann und die von der Halterung 10 (FIG 1) auf das in ihr fixierte Gehäuse der Fokussiereinheit 29 ausgeübte Spannkraft auf das Bauteil 4 überträgt.

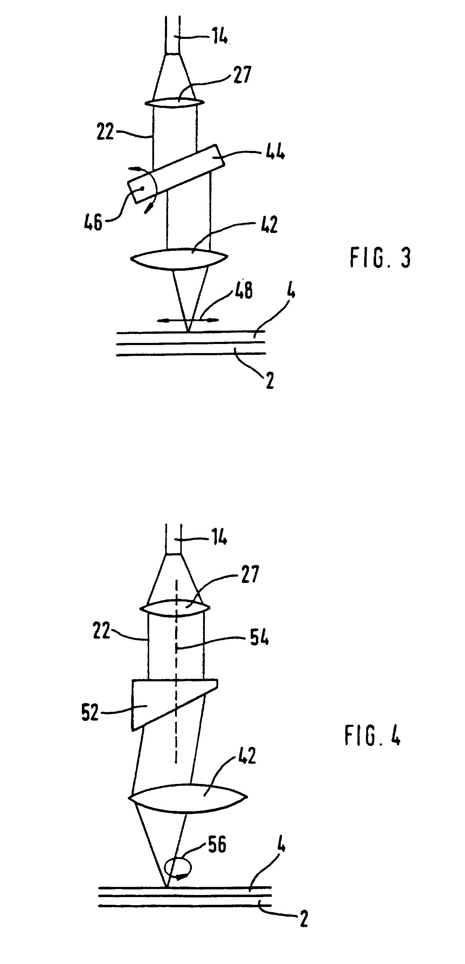

Im Ausführungsbeispiel gemäß FIG 3 ist ein Laserschweißkopf 40 vorgesehen, bei dem anstelle des in FIG 2 vorgesehenen fokussierenden Ablenkspiegels 30 eine Linse 42 zum Fokussieren des von der Kollimieroptik 27 kollimierten Laserstrahls 22 vorgesehen ist. Im Strahlengang des kollimierten Laserstrahls 22, d.h. in Ausbreitungsrichtung des Laserstrahls 22 vor der Linse 42, ist eine optisch durchlässige planparallele Platte 44 angeordnet, die um eine senkrecht zur Mittenachse des kollimierten Laserstrahls 22 orientierte Achse 46 schwenkbar gelagert ist. Durch Schwenken der planparallen Platte 44 kann der Laserstrahl auf der Oberfläche des Bauteils 4 entlang einer geraden Linie 48 hin und her bewegt werden.

In der Ausführungsform gemäß FIG 4 ist vor der Linse 42 im kollimierten Laserstrahl 22, d.h. zwischen der Linse 42 und der Kollimieroptik 27, ein für den Laserstrahl 22 durchlässiges Prisma 52 angeordnet. Das Prisma 52 ist schwenkbar, vorzugsweise drehbar, um die Mittenachse 54 des Laserstrahls 22 gelagert. Eine Umdrehung des Prismas 52 um 360° bewirkt, daß der Fokus des Laserstrahls 22 auf dem Bauteil 4 eine geschlossene Kurve 56, im Beispiel ein Kreis, beschreibt.

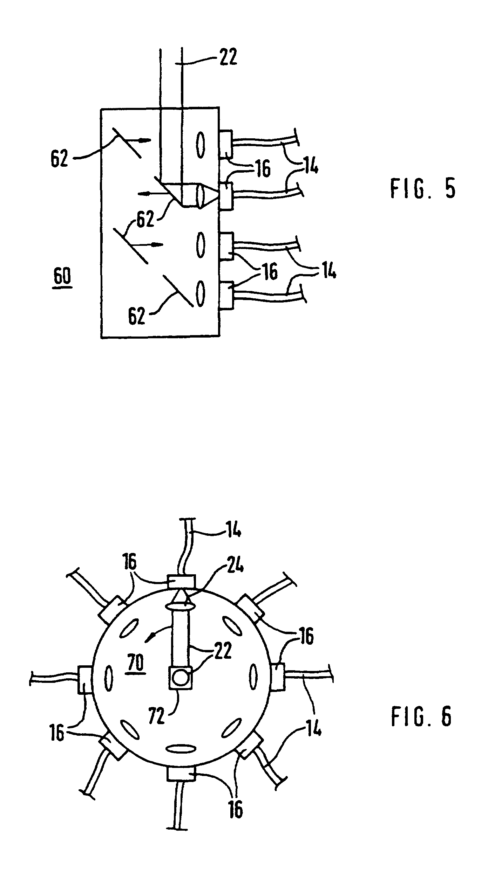

Gemäß FIG 5 ist ein Strahlverteiler 60 vorgesehen, der in Abwandlung des in FIG 1 dargestellten Ausführungsbeispiels eine Vielzahl hintereinander angeordneter linear verschiebbarer Spiegel 62 enthält.

Gemäß FIG 6 ist in einer vorteilhaften Ausgestaltung ein Strahlverteiler 70 vorgesehen, der einen um die Achse des auf ihn auftreffenden Laserstrahls 22 drehbaren und unter 45° zu dieser Achse geneigten Umlenkspiegel 72 enthält, mit dem der Laserstrahl 22 radial oder sternförmig auf am Umfang des Strahlverteilers 70 angeordnete Ausgänge 16 verteilt werden kann.

### Bezugszeichenliste

- 2,4: Bauteile
- 6: Spanneinrichtung
- 8: Spannelemente
- 10: Hebel
- 12: Laserschweißkopf
- 14: Stirnfläche
- 14: Strahlführungseinrichtung
- 16: Ausgang
- 18,60,70: Strahlverteiler
- 20: Spiegel (schwenkbar)
- 22: Laserstrahl
- 24: Fokussieroptik
- 26: Kollimiereinheit
- 28: Umlenkspiegel
- 28,30: Ablenkspiegel
- 32: Antriebselemente
- 32: Schweißdrüse
- 42: Linse
- 44: Platte
- 46: Achse
- 48: Linie
- 52: Prisma
- 54: Mittenachse
- 56: Kurve
- 62: Spiegel (verschiebbar)
- 72: Umlenkspiegel

## Patentansprüche

1. Vorrichtung zum Schweißverbinden zweier Bauteile (2, 4) mit einem Laserstrahl (22), die sich in einem Teilbereich ihrer einander zugewandten Oberflächen überlappen, mit einem optischen Strahlverteiler (18; 60; 70), der einen Eingang für den Laserstrahl (22) sowie eine Einrichtung (20; 62; 72) zum abwechselnden Verteilen des Laserstrahls (22) auf eine Mehrzahl von Ausgängen (16) hat, die jeweils über eine Strahlführungseinrichtung (14) optisch an einen Laserschweißkopf (12) gekoppelt sind, aus dem ein fokussierter Laserstrahl (22) austritt,
**dadurch gekennzeichnet,**
**daß** im Laserschweißkopf (12) zum Führen des fokussierten Laserstrahles (22) über die Oberfläche des dem Laserschweißkopf (12) zugewandten Bauteils (4) bei ruhendem Laserschweißkopf (12) eine Fokussier- und Ablenkoptik beweglich angeordnet ist.

2. Vorrichtung nach Anspruch 1, bei der zum Fokussieren des Laserstrahls (22) ein fokussierender Ablenkspiegel (30) vorgesehen ist.

3. Vorrichtung nach Anspruch 1 oder 2, bei der ein linear verschiebbar gelagerter Ablenkspiegel (30) vorgesehen ist.

4. Vorrichtung nach Anspruch 1, bei der zum Fokussieren des Laserstrahls (22) eine Linse (42) vorgesehen ist.

5. Vorrichtung nach Anspruch 4, bei der vor der Linse (42) eine um eine senkrecht zur Mittenachse des Laserstrahls (22) orientierte Achse (46) schwenkbar gelagerte planparallele Platte (44) angeordnet ist.

6. Vorrichtung nach Anspruch 4, bei der vor der Linse (42) ein um die Mittenachse des Laserstrahls (22) drehbar gelagertes Prisma (52) angeordnet ist.

7. Vorrichtung nach einem der vorhergehenden Ansprüche, bei dem als Strahlführungseinrichtung (14) zwischen dem Strahlverteiler (18; 60; 70) und dem Laserschweißkopf (12) eine Lichtleitfaser vorgesehen ist.

8. Vorrichtung nach einem der vorhergehenden Ansprüche, bei der im Strahlverteiler (18) im Strahlengang des Laserstrahls (22) schwenkbare Umlenkspiegel (20) angeordnet sind.

9. Vorrichtung nach einem der vorhergehenden Ansprüche, bei der im Strahlverteiler (60) im Strahlengang des Laserstrahls (22) verschiebbare Umlenkspiegel (62) angeordnet sind.

10. Vorrichtung nach einem der vorhergehenden Ansprüche, bei der im Strahlverteiler (70) im Strahlengang des Laserstrahls (22) ein Umlenkspiegel (72) angeordnet ist, der um die Achse des auf ihn einfallenden Laserstrahls (22) drehbar ist und dem mehrere um diese Achse sternförmig angeordnete Ausgänge (16) zugeordnet sind.

## Claims

1. Apparatus for welding together by a laser beam (22) two components (2, 4) which overlap in a subregion of their mutually facing surfaces, having an optical beam distributor (18; 60; 70), which has an input for a laser beam (22) and the device (20; 62; 72) for alternately distributing the laser beam (22) between a plurality of outputs (16) which are respectively coupled optically to a laser welding head (12) via a beam-guiding device (14), from which a focussed laser beam (22) emerges, **characterized in that** a focussing and deflecting optical system is arranged so that it can move in the laser welding head (12) for guiding the focussed laser beam (22) over the surface of the component (4) facing the laser welding head (12).

2. Apparatus according to Claim 1, in which a focussing deflecting mirror (30) is provided for focussing the laser beam (22).

3. Apparatus according to Claim 1 or 2, in which a linearly displaceably mounted deflecting mirror (30) is provided.

4. Apparatus according to Claim 1, in which a lens (42) is provided for focussing the laser beam (22).

5. Apparatus according to Claim 4, in which a plane-parallel plate (44) mounted pivotably about an axis (46) oriented perpendicularly with respect to the centre axis of the laser beam (22) is arranged in front of the lens (42).

6. Apparatus according to Claim 4, in which a prism (52) mounted rotatably about the centre axis of the laser beam (22) is arranged in front of the lens (42).

7. Apparatus according to one of the preceding claims, in which a light-conducting fibre is provided as the beam-guiding device (14) between the beam distributor (18; 60; 70) and the laser welding head (12).

8. Apparatus according to one of the preceding claims, in which path-folding mirrors (20) which can be pivoted in the path of rays of the laser beam (22) are arranged in the beam distributor (18).

9. Apparatus according to one of the preceding claims, in which path-folding mirrors (62) which can be displaced in the path of rays of the laser beam (22) are arranged in the beam distributor (60).

10. Apparatus according to one of the preceding claims, in which a path-folding mirror (72) which is rotatable about the axis of the laser beam (22) falling onto it and to which a plurality of outputs (16) arranged in a stellar formation about this axis are assigned is arranged in the path of rays of the laser beam (22) in the beam distributor (70).

## Revendications

1. Dispositif pour assembler par soudage par un faisceau (22) laser, deux éléments (2,4) qui se chevauchent dans une partie de leurs surfaces tournées l'une vers l'autre, comprenant un répartiteur (18,60,70) optique de faisceau, qui a une entrée pour le faisceau (22) laser, ainsi qu'un dispositif (20,62,72) de répartition alternée du faisceau (22) laser sur une multiplicité de sorties (16) qui sont couplées respectivement par un dispositif (14) de guidage de faisceau optiquement sur une tête (12) de soudage par laser de laquelle sort un faisceau (22) laser focalisé,
**caractérisé,**
**en ce que** dans la tête (12) de soudage par laser, il est monté mobile une optique de focalisation et de déviation pour guider le faisceau (22) laser focalisé sur la surface de l'élément (4) tourné vers la tête (12) de soudage par laser, lorsque la tête (12) de soudage par laser est au repos.

2. Dispositif suivant la revendication 1, dans lequel il est prévu pour focaliser le faisceau (22) laser un miroir (30) focalisant de déviation.

3. Suivant la revendication 1 ou 2, dans lequel il est prévu un miroir (30) de déviation monté coulissant linéairement.

4. Suivant la revendication 1, dans lequel il est prévu une lentille (42) pour la focalisation du faisceau (22) laser.

5. Suivant la revendication 4, dans lequel il est monté en avant de la lentille (42) un plateau (44) à plans parallèles, monté basculant par rapport à un axe (46) dirigé perpendiculairement à l'axe médian du faisceau (22) laser.

6. Suivant la revendication 4, dans lequel il est monté en avant de la lentille (42) un prisme (52) monté tournant par rapport à l'axe médian du faisceau (22) laser.

7. Suivant l'une des revendications précédentes, dans lequel il est prévu comme dispositif (14) de guidage du faisceau une fibre optique entre le répartiteur (18,60,70) de faisceau est la tête (12) de soudage par laser.

8. Suivant l'une des revendications précédentes, dans lequel il est monté, dans le répartiteur (18) de faisceau, des miroirs (20) de déviation pouvant basculer dans le trajet du faisceau (22) laser.

9. Suivant l'une des revendications précédentes, dans lequel il est monté, dans le répartiteur (60) de faisceau, des miroirs (62) de déviation pouvant coulisser dans le trajet du faisceau (22) laser.

10. Suivant l'une des revendications précédentes, dans lequel il est monté, dans le répartiteur (70) de faisceau, un miroir (72) de déviation dans le trajet du faisceau (22) de laser, miroir qui est monté tournant par rapport à l'axe du faisceau (22) laser qui arrive sur lui et auquel sont associées plusieurs sorties (16) disposées en forme d'étoile autour de cet axe.
